# EUROPÄISCHE PATENTANMELDUNG

(11) **EP 4 213 363 A1**
(43) Veröffentlichungstag der Anmeldung: **19.07.2023**
(21) Anmeldenummer: 22151801.2
(22) Anmeldetag: 17.01.2022
(51) Int. Cl.: H02M 7/483, H02M 1/32, H02M 7/757, H02H 7/26, H02J 3/36

(54) **BREMSSTELLER FÜR EINEN MODULAREN MULTILEVEL-STROMRICHTER**

(71) Anmelder: Siemens Aktiengesellschaft, 80333 München (DE)
(72) Erfinder: Baruschka, Lennart, 30900 Wedemark (DE); Karwatzki, Dennis, 90480 Nürnberg (DE)
(74) Vertreter: Siemens Patent Attorneys

(57) **Zusammenfassung**

Die Erfindung betrifft einen Bremssteller (1) für einen modularen Multilevel-Stromrichter (5), aufweisend einen Widerstand (3), eine erste Schaltgruppe (21) sowie einen ersten Anschluss (11) und einen zweiten Anschluss (12). Zur Verbesserung der Verwendbarkeit des Bremsstellers in einem Stromrichter wird vorgeschlagen, dass der Bremssteller (1) ferner eine zweite Schaltgruppe (22) aufweist, wobei die erste Schaltgruppe (21) und die zweite Schaltgruppe (22) jeweils mindestens ein Submodul (2) aufweisen, wobei die erste Schaltgruppe (21) zwischen dem Widerstand (3) und dem ersten Anschluss (11) und die zweite Schaltgruppe (22) zwischen dem Widerstand (3) und dem zweiten Anschluss (12) derart angeordnet sind, dass die erste Schaltgruppe (21), der Widerstand (3) und die zweite Schaltgruppe (22) eine elektrische Reihenschaltung (40) zwischen dem ersten Anschluss (11) und dem zweiten Anschluss (12) bilden. Die Erfindung betrifft weiter einen modularen Multilevel-Stromrichter (5) mit einem derartigen Bremssteller (1). Weiter betrifft die Erfindung eine Stromrichteranordnung (6) mit einem derartigen modularen Multilevel-Stromrichter (5) und einer Einspeiseeinrichtung (61), wobei die Einspeiseeinrichtung (61) mindestens einen Diodengleichrichter (62) umfasst. Ferner betrifft die Erfindung ein Verfahren zum Betreiben eines derartigen Bremsstellers (1), eines derartigen modularen Multilevel-Stromrichters (5) oder einer derartigen Stromrichteranordnung (6), wobei alle Submodule (2) des Bremsstellers (1) zur schnellen Reduktion eines Bremsstroms gleichzeitig eingeschaltet werden.

## Beschreibung

Die Erfindung betrifft einen Bremssteller für einen Stromrichter mit einem Zwischenkreis aufweisend einen Widerstand, eine Schaltgruppe mit Submodulen und einen ersten Anschluss und einen zweiten Anschluss. Die Erfindung betrifft weiter einen modularer Multilevel-Stromrichter mit einem derartigen Bremssteller. Ferner betrifft die Erfindung eine Stromrichteranordnung mit einem derartigen modularen Multilevel-Stromrichter und einer Einspeiseeinrichtung. Die Erfindung betrifft ferner ein Verfahren zum Betreiben eines derartigen Bremsstellers oder eines derartigen modularen Multilevel-Stromrichters oder einer derartigen Stromrichteranordnung.

Bei verschiedenen Anwendungen von Stromrichtern mit Zwischenkreis, insbesondere mit einem Spannungszwischenkreis, und modularen Multilevel-Stromrichtern ist ein Bremssteller zur Umwandlung von elektrischer Energie in Wärme vorteilhaft. Ein typisches Beispiel ist der Betrieb eines Motors mit einem modularen Multilevel-Stromrichter, der mittels Diodengleichrichter gespeist wird. Falls in dieser Konfiguration ein Bremsbetrieb vorgesehen werden soll, kommt üblicherweise ein Bremssteller zum Einsatz. Aber auch bei rückspeisefähigen Konfigurationen, die eine Bremsenergie des Motors in ein Energieversorgungsnetz rückspeisen können, beispielsweise mit zwei über den Zwischenkreis verbundenen, d.h. gleichspannungsseitig verbundenen, modularen Multilevel-Stromrichtern, kann ein Bremssteller vorteilhaft sein, falls beispielsweise der Bremsbetrieb eines Motors bei gleichzeitigem Netzausfall benötigt wird.

Der modulare Multilevel-Stromrichter ist in der DE 101 03 031 A1 offenbart. Dieser Stromrichter weist Submodule auf, mit denen eine feinstufige Wechselspannung aus einer Gleichspannung erzeugt werden kann.

Typischerweise wird ein solcher Bremssteller für einen modularen Multilevel-Stromrichter mit einem zentralen Widerstand, auch als Bremswiderstand bezeichnet, realisiert. Alternativ sind auch Lösungen mit mehreren auf die Submodule des modularen Multilevel-Stromrichters verteilte Bremswiderstände möglich. Eine der möglichen Lösungen einen Bremssteller mit zentralem Bremswiderstand zu realisieren ist in der EP 1 917 712 B1 offenbart.

Aus der EP 1 917 712 B1 ist ein Pulswiderstand bekannt. Dieser Pulswiderstand bezieht sich auf eine Anwendung für einen Umrichter im höheren Spannungs- und Leistungsbereich. Dieser Pulswiderstand weist dabei wenigstens zwei zweipolige Subsysteme und ein Widerstandselement auf, wobei diese Subsysteme und das Widerstandselement elektrisch in Reihe geschaltet sind. Dadurch erhält man einen Pulswiderstand mit dem ein Bremsstrom feinstufig steuerbar ist und der mit einfachen Mitteln an jede beliebige Mittelspannung angepasst werden kann.

Dabei ist der Widerstand des Bremsstellers, auch als Bremsstellerwiderstand bezeichnet, in Serie mit mehreren Submodulen des modularen Multilevel-Stromrichters zu einem Bremsstellerzweig, oder auch einfach als Bremssteller bezeichnet, geschaltet. Eine derartige Konfiguration ist neben den Produkten SINAMICS PERFECT HARMONY GH150 und SINAMICS PERFECT HARMONY SH150 auch aus der Veröffentlichung "Braking chopper solutions for Modular Multilevel Converters" (S. Schoening, P. K. Steimer and J. W. Kolar, Proceedings of the 2011 14th European Conference on Power Electronics and Applications, 2011, pp. 1-10.) und "Performance of a Distributed Dynamic Brake for an Induction Motor Fed by a Modular Multilevel DSCC Inverter," (Y. Okazaki, S. Shioda and H. Akagi, in IEEE Transactions on Power Electronics, vol. 33, no. 6, pp. 4796-4806, June 2018, doi: 10.1109/TPEL.2017.2737678) bekannt. Bei diesen Konfigurationen ist einer der beiden Pole des Bremswiderstands mit einem der beiden Leiter des Zwischenkreises, also mit einem Anschluss des Bremsstellers direkt verbunden.

Für den Betrieb des Bremsstellers wird der gemittelte Strom durch den Bremssteller, auch als Bremsstellerstrom bezeichnet, beispielsweise durch Pulsbreitenmodulation eingestellt. Dafür befinden sich die in Serie geschalteten Submodule, die beispielsweise als Halbbrücke ausgeführt sind, entweder im Zustand "Ein" (Submodulkondensator ist mit den Anschlüssen des Submoduls verbunden) oder Zustand "Aus" (Anschlüsse des Submoduls sind kurzgeschlossen). Befinden sich die Submodule oder zumindest ein Teil der Submodule im Zustand Aus, fließt abhängig von Zwischenkreisspannung, der Anzahl der ausgeschalteten Submodule und dem Widerstandswert des Bremswiderstands ein Strom durch den Bremsstellerzweig. Zur Steuerung oder Regelung des Stroms können einzelne Submodule eingeschaltet (Erhöhung des Bremsstellerstroms) bzw. ausgeschaltet (Reduzierung des Bremsstellerstroms) werden.

Der Erfindung liegt die Aufgabe zugrunde, einen Bremssteller insbesondere hinsichtlich der Verwendbarkeit in einem Stromrichter zu verbessern.

Diese Aufgabe wird durch einen Bremssteller für einen Stromrichter mit einem Zwischenkreis, aufweisend einen Widerstand sowie eine erste Schaltgruppe, zweite Schaltgruppe und einen ersten Anschluss und einen zweiten Anschluss gelöst, wobei die erste Schaltgruppe und die zweite Schaltgruppe jeweils mindestens ein Submodul aufweisen, wobei die erste Schaltgruppe zwischen dem Widerstand und dem ersten Anschluss und die zweite Schaltgruppe zwischen dem Widerstand und dem zweiten Anschluss derart angeordnet sind, dass die erste Schaltgruppe, der Widerstand und die zweite Schaltgruppe eine elektrische Reihenschaltung zwischen dem ersten Anschluss und dem zweiten Anschluss bilden. Diese Aufgabe wird weiter durch einen modularer Multilevel-Stromrichter mit einem derartigen Bremssteller gelöst, wobei der modulare Multilevel-Stromrichter mindestens ein Phasenmodul aufweist, wobei zwischen zwei Gleichspannungsanschlüssen des Phasenmoduls eine Vielzahl von in Reihe angeordneter, weiterer Submodule angeordnet sind, wobei ein Verbindungspunkt zwischen zwei der weiteren Submodule einen Phasenanschluss des modularen Multilevel-Stromrichters bildet, wobei der erste Anschluss des Bremsstellers mit einem ersten der zwei Gleichspannungsanschlüsse des Phasenmoduls und der zweite Anschluss des Bremsstellers mit einem zweiten der zwei Gleichspannungsanschlüsse des Phasenmoduls elektrisch verbunden ist. Weiter wird diese Aufgabe durch eine Stromrichteranordnung mit einem derartigen modularen Multilevel-Stromrichter und einer Einspeiseeinrichtung gelöst, wobei die Einspeiseeinrichtung mindestens einen Diodengleichrichter umfasst. Ferner wird diese Aufgabe durch ein Verfahren zum Betreiben eines derartigen Bremsstellers oder eines derartigen modularen Multilevel-Stromrichters oder einer derartigen Stromrichteranordnung gelöst, wobei alle Submodule des Bremsstellers zur schnellen Reduktion eines Bremsstroms gleichzeitig eingeschaltet werden.

Vorteilhafte Ausgestaltungen der Erfindung sind in den abhängigen Ansprüchen angegeben.

Der Erfindung liegt unter anderem die Erkenntnis zugrunde, dass sich der Aufbau eines Bremsstellers dadurch verbessern lässt, dass in einer Reihenschaltung von Submodulen und Bremswiderstand die Submodule beidseitig vom Bremswiderstand zwischen den Anschlüssen des Bremsstellers angeordnet werden. Dadurch lässt sich die maximal auftretende Spannung innerhalb des Bremsstellers bzw. innerhalb eines Stromrichters, der einen derartigen Bremsteller umfasst, reduzieren. Damit sinken auch die Isolationsanforderungen an den Bremssteller bzw. den entsprechenden Stromrichter. Die Submodule des Bremsstellers werden auch als Bremsstellersubmodule bezeichnet.

Der Übergang zwischen den beiden Schaltzuständen (EIN und AUS) im Normalbetrieb des Bremsstellers erfolgt beispielsweise durch sequenzielles Schalten der Submodule, um hohe Spannungen innerhalb des Bremsstellers oder des Stromrichters zu vermeiden. Um ein gleichzeitiges Schalten aller Submodule zu ermöglichen, ist eine entsprechende Auslegung auf hohe Isolationsspannungen erforderlich. Diese macht den Stromrichter aufgrund von Isolationsabständen groß in seinen Abmessungen.

Werden die Submodule in den Zustand EIN versetzt, verursacht der aufgrund von den vorhandenen Induktivitäten, insbesondere aufgrund von einem induktiven Verhalten der Leitungen und des Bremswiderstands, aufrechterhaltene Strom eine Ladung der Submodulkapazitäten der Submodule des Bremsstellers. Abhängig von den Parametern der Komponenten, der Anzahl der Submodule des Bremsstellers und der Verzögerung beim versetzten Schalten, ergeben sich dabei Betriebszustände, bei denen die gestellte Spannung der in Serie geschalteten Bremsstellersubmodule größer ist als die Zwischenkreisspannung. Da die höchste im Umrichter auftretende Spannung für die Anforderungen der Isolation beispielsweise nach IEC 61800-5-1 mitberücksichtigt wird, erhöhen solche Betriebszustände die Isolationsanforderungen. Diese Betrachtung ist unabhängig vom Aufbau der Submodule und betrifft insbesondere neben dem Aufbau als Halbbrückenmodul auch andere Aufbauten wie beispielsweise Doppelmodule und Vollbrückenmodule.

Der Bremswiderstand wird bei dem vorgeschlagenen Aufbau nicht direkt mit einem seiner beiden Pole mit einem der Anschlüsse des Bremsstellers, also mit dem Zwischenkreis, verbunden. Stattdessen werden die Submodule des Bremsstellers in zwei Gruppen von in Serie geschalteten Submodulen aufgeteilt. Diese beiden Gruppen werden als erste und zweite Schaltgruppe bezeichnet. Die Anbindung des Bremswiderstands erfolgt dann innerhalb des Bremsstellers zwischen diesen beiden Gruppen von Submodulen.

Das Verhalten der Bremsstellers mit seinen Submodulen ist in Bezug auf die Steuer- und Regelbarkeit in diesem Aufbau nahezu unverändert und die Summe der von den Submodulen gestellten Spannungen kann weiterhin größer sein als die gestellte Zwischenkreisspannung des Stromrichters, insbesondere eines modularen Multilevel-Stromrichters. Diese negative Spannung über dem Bremswiderstand führt zu einem Strom durch diesen und damit auch zu einer Reduktion der Spannung zwischen zwei auf unterschiedlichen Seiten des Widerstands liegenden Punkten. Damit ist die größte zwischen zwei Punkten des Stromrichters abfallende Spannung weiterhin die Zwischenkreisspannung, bzw. die Erhöhung der größten zwischen zwei Punkten abfallenden Spannung gegenüber der Zwischenkreisspannung ist geringer als bei der bereits bekannten Anordnung des Bremsstellers.

Bei der hier vorgeschlagenen Anbindung des Bremswiderstands verringern sich die Isolationsanforderung aufgrund der oben beschriebenen Betriebszustände gegenüber der bisherigen Anbindung. Daraus resultiert für bestehende Produkte und deren Isolationskoordinationen eine höherer mögliche Bremsstellerleistung oder es wird je nach Randbedingungen ein Bremsstellerbetrieb überhaupt erst möglich. Eine Erhöhung der maximal zulässigen Zwischenkreisspannung ist auch möglich. Für zukünftige Produkte ermöglichen die geringeren Isolationsanforderungen eine Kostensenkung durch kleinere einzuhaltende Abstände und niedrigere Anforderungen an verwendete Komponenten. Bei Berücksichtigung der auftretenden Spannungen im beschriebenen Betrieb des Bremsstellers können insbesondere die Anforderungen hinsichtlich Luftstrecken und Teilentladungsaussetzspannung nach IEC 61800-5-1 einfacher, platzsparender und kostengünstiger ausgeführt werden.

Der modulare Multilevel-Stromrichter kann dabei eine Vielzahl von Phasenmodulen aufweisen. Besonders vorteilhaft für die Verbindung mit dreiphasigen Netzen oder dreiphasigen elektrischen Maschinen hat es sich erwiesen, wenn der modulare Multilevel-Stromrichter genau drei Phasenmodule aufweist. Zur Steigerung der Leistungsfähigkeit ist es ebenfalls sinnvoll, wenn die Anzahl der Phasenmodule ein Vielfaches von drei annimmt. Dabei werden die Phasenmodule bezüglich Ihrer Gleichspannungsanschlüsse elektrisch parallel angeordnet. Dabei bilden die Gleichspannungsanschlüsse den Zwischenkreis des modularen Multilevel-Stromrichters.

Der Bremswiderstand ist insbesondere dann vorteilhaft in dem modularen Multilevel-Stromrichter einsetzbar, wenn dieser keine elektrische Energie in ein Energieversorgungsnetz zurückspeisen kann. Dies ist beispielsweise bei der Stromrichteranordnung der Fall, bei der die Einspeiseeinrichtung durch einen oder mehrere Diodengleichrichter gebildet wird, und somit eine Umkehrung der Energieflussrichtung nicht zulässt. In diesem Fall wird die durch das Bremsen eines Antriebs erzeugte elektrische Energie durch den Widerstand des Bremsstellers in Wärme umgewandelt. Dies ermöglicht ein verschleißfreies Abbremsen des Antriebs, insbesondere eines Motors des Antriebs, bei dem der modulare Multilevel-Stromrichter des Antriebs besonders kompakt und kostengünstig ausgeführt werden kann.

Für den Betrieb ergibt sich dadurch die Möglichkeit einer besonders hohen Dynamik. Es ist mit dem vorgeschlagenen Aufbau möglich, zur schnellen Reduktion des Stroms durch den Bremswiderstand, alle Submodule gleichzeitig einzuschalten ohne dass unzulässig hohe Spannungen im Stromrichter entstehen können. Auch sind für diesen Betrieb keine erhöhten Anforderungen an die Isolation zu beachten, da entstehende Spannungen bei einem Betrieb mit hoher Dynamik, insbesondere beim gleichzeitigen Einschalten aller Submodule, bei dem vorgeschlagenen Aufbau unkritisch sind.

Bei einer vorteilhaften Ausgestaltung der Erfindung weisen die erste und die zweite Schaltgruppe jeweils mindestens zwei Submodule auf, wobei die Submodule der jeweiligen Schaltgruppe elektrisch in Reihe angeordnet sind. Um den Bremssteller auch für Stromrichter mit höherer Zwischenkreisspannung einsetzen zu können, kann die Anzahl der Submodule in den einzelnen Schaltgruppen erhöht werden. Die Anzahl ergibt sich dann aus der Höhe der Zwischenkreisspannung und dem Spannungssperrvermögen der in den Submodulen eingesetzten Halbleiter unter Berücksichtigung der betriebsbedingt auftretenden Überspannungen in den Bremsstellersubmodulen. Darüber hinaus kann es sinnvoll sein, aus Redundanzgründen die Anzahl der Submodule zu erhöhen, so dass auch bei Ausfall eines oder mehrerer Submodule der Bremssteller betriebsfähig bleibt. Es kann auch vorteilhaft sein, die Anzahl der Submodule zu erhöhen, um einen größeren Entladestrom der Module bereitstellen zu können und somit die minimal erforderliche Zeit im Zustand EIN zu reduzieren.

Dabei hat es sich als vorteilhaft erwiesen, die Anzahl der Submodule der ersten Schaltgruppe und der zweiten Schaltgruppe gleich zu wählen, damit kann die höchste auftretende Spannung maximal reduziert werden. Alternativ ist es auch möglich, die Anzahl der Submodule je Schaltgruppe nach anderen Kriterien, wie beispielsweise dem zur Verfügung stehenden Bauraum festzulegen und zu optimieren.

Bei einer weiteren vorteilhaften Ausgestaltung der Erfindung weist der Bremssteller eine dritte Schaltgruppe und einen weiteren Widerstand auf, wobei die dritte Schaltgruppe mindestens ein Submodul aufweist, wobei der weitere Widerstand und die dritte Schaltgruppe in einer weiteren Reihenschaltung angeordnet sind, wobei die weitere Reihenschaltung zwischen der zweiten Schaltgruppe und dem zweiten Anschluss angeordnet und mit der Reihenschaltung elektrisch in Reihe angeordnet ist. Durch diesen Aufbau ist es möglich, die auftretenden Spannungen, die für die Isolationsanforderungen innerhalb des Widerstandsaufbaus bestimmend sind, weiter zu reduzieren. Durch die Aufteilung auf mehrere Widerstände und Schaltgruppen können diese gleichzeitig flexibel im Stromrichter angeordnet werden und so den baulichen Belangen Rechnung tragen, so dass der Stromrichter besonders kompakt in Bezug auf seine Baugröße herstellbar ist. Darüber hinaus können die Komponenten so flexibel im Stromrichter verteilt werden, dass sie besonders einfach zugänglich sein. Damit ist eine gute Wartbarkeit trotz geringer Abmessungen des Stromrichters möglich.

Dabei ist es besonders vorteilhaft, wenn die dritte Schaltgruppe direkt mit dem zweiten Anschluss des Bremsstellers elektrisch verbunden ist. In diesem Fall ist dann der weitere Widerstand direkt mit der zweiten Schaltgruppe verbunden. Stellt man diese Anordnung in einem elektrischen Ersatzschaltbild dar, so könnten die parasitären Induktivitäten durch eine oder mehrere Induktivitäten an jedem Punkt der Reihenschaltung bzw. der weiteren Reihenschaltung dargestellt werden. Die durch den von den parasitären Induktivitäten getriebenen Strom entstehenden Spannungen an den parasitären Induktivitäten wirken sich dann nicht negativ auf die Auslegung des Bremsstellers aus.

Im Folgenden wird die Erfindung anhand der in den Figuren dargestellten Ausführungsbeispiele näher beschrieben und erläutert. Es zeigen:
- FIG 1 und 2: Ausführungsbeispiele eines Bremsstellers,
- FIG 3: einen modularen Multilevel-Stromrichter mit einem derartigen Bremssteller und
- FIG 4: eine Stromrichteranordnung.

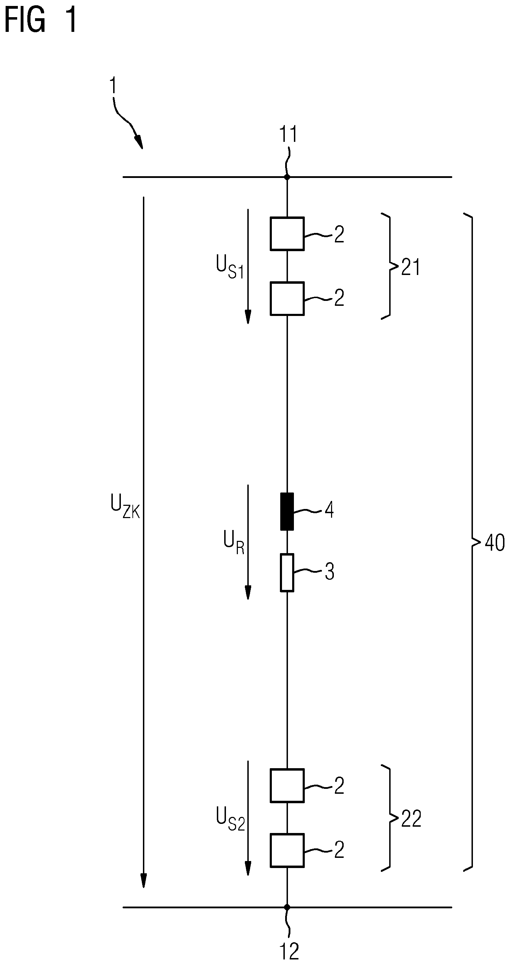

Die FIG 1 zeigt ein erstes Ausführungsbeispiel eines vorgeschlagenen Bremsstellers 1. Zwischen einem ersten Anschluss 11 und einem zweiten Anschluss 12 des Bremsstellers 1 sind eine erste Schaltgruppe 21 von Submodulen 2, eine zweite Schaltgruppe 22 von Submodulen 2 und ein Widerstand 3 angeordnet. Diese Elemente bilden eine elektrische Reihenschaltung 40. Die Submodule 2 der jeweiligen Schaltgruppe 21, 22 sind dabei elektrisch in Reihe angeordnet. Über die jeweilige Schaltgruppe 21, 22 liegt die Spannung Uₛ₁ bzw. Uₛ₂ an. Das induktive Verhalten des Widerstands 3 und der elektrischen Verbindungen, beispielsweise durch die zum Widerstand 3 verlaufenden Kabel, kommt durch die parasitäre Induktivität 4 zum Ausdruck. Diese ist daher in unmittelbarer Umgebung zum Widerstand 3 dargestellt. Es handelt sich hierbei um ein parasitäres, elektrisches Verhalten des Widerstands 3 und/oder der Verbindungskabel.

Die Anzahl der Submodule 2 der jeweiligen Schaltgruppen 21, 22 kann einen beliebigen Wert größer oder gleich eins annehmen. Dabei kann die Anzahl der Submodule 2 der jeweiligen Schaltgruppen 21, 22 gleich sein, um beispielsweise die maximal auftretenden Spannungen Uₛ₁ und Uₛ₂ über den Schaltgruppen 21, 22 möglichst gleich und die Überspannung für die Isolationskoordination möglichst gering zu halten. Alternativ kann die Anzahl der Submodule 2 der jeweiligen Schaltgruppen 21, 22 auch unterschiedlich sein, um beispielsweise den zur Verfügung stehenden Bauraum des Stromrichters 5 vorteilhaft auszunutzen und den Bremssteller 1 möglichst kompakt auszuführen. Der Widerstand 3 ist dabei zwischen der ersten Schaltgruppe 21 und der zweiten Schaltgruppe 22 angeordnet. Da sich der Widerstand 3 zwischen der ersten und zweiten Schaltgruppe 21, 22 befindet, ist die Zwischenkreisspannung U_{zk} für die Betrachtung der Isolationsanforderungen heranzuziehen und nicht mehr die Summe der Spannung Uₛ₁ über der ersten Schaltgruppe 21 und der Spannung Uₛ₂ über der zweiten Schaltgruppe 22. Dies liegt daran, dass für solche kritischen Betriebspunkte, zum Beispiel bei einer schnellen Reduktion des Stroms durch den Bremssteller 1, ein in Zählpfeilrichtung von U_{R} negativer Spannungsabfall über dem Widerstand 3 anliegt. Durch die Aufteilung der Submodule 2 auf die zwei Schaltgruppen wirkt sich dieser negative Spannungsabfall jedoch nicht negativ auf die im Bremssteller 1 gegenüber z.B. Erde anliegenden Spannungen aus, da sich die Spannungen Uₛ₁ und Uₛ₂ der einzelnen Schaltgruppen 21, 22 nicht zu einer hohen, für die Isolationsbetrachtungen relevanten Spannung addieren.

Dadurch ergibt sich eine Reduktion der für die Auslegung der Isolation relevanten Spannung, ohne dass weitere Komponenten erforderlich werden, sondern allein durch die erfindungsgemäße Anordnung der Submodule 2 in mindestens zwei Schaltgruppen 21, 22.

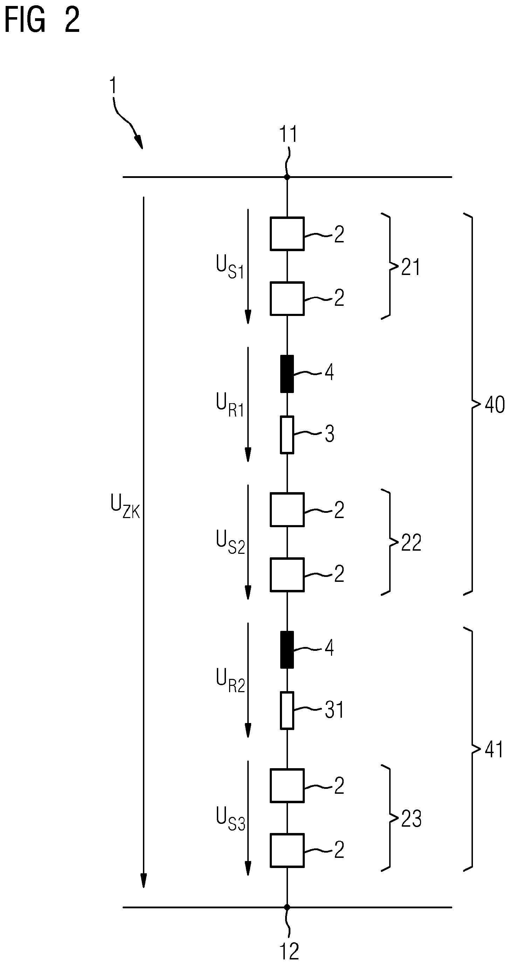

Die FIG 2 zeigt, wie eine Anordnung mit zwei Schaltgruppen 21, 22 und einem Widerstand 3 um eine dritte Schaltgruppe 23 und einen weiteren Widerstand 31 erweitert werden kann. Zur Vermeidung von Wiederholungen wird auf die Beschreibung zu der FIG 1 sowie auf die dort eingeführten Bezugszeichen verwiesen. Zur Erweiterung um die dritte Schaltgruppe 23 und den weiteren Widerstand 31 werden diese Elemente in einer weiteren Reihenschaltung 41 angeordnet und elektrisch in Reihe zu der bereits vorhandenen Reihenschaltung 40 angeordnet. Die Anordnung erfolgt in vorteilhafter Weise derart, dass die dritte Schaltgruppe 23 in der weiteren Reihenschaltung 41 dem zweiten Anschluss 12 des Bremsstellers 1 zugewandt angeordnet ist und der weitere Widerstand 31 in der weiteren Reihenschaltung 41 der zweiten Schaltgruppe 22 der Reihenschaltung 40 zugewandt angeordnet ist. Somit können die im Bremssteller 1 auftretenden Spannungen Uₛ₁, Uₛ₂ bzw. Uₛ₃ weiter reduziert werden. Dies erhöht den Freiheitsgrad, die Widerstände 3,31 und/oder die Submodule 2 mechanisch im Bremssteller 1 bzw. im modularen Multilevel-Stromrichter 5 anzuordnen.

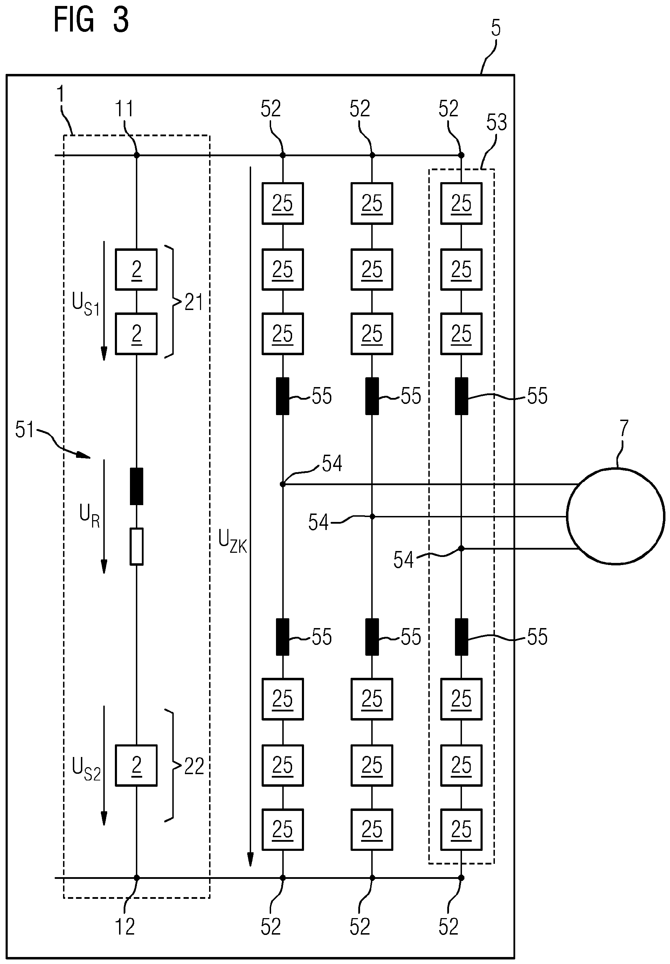

Die FIG 3 zeigt einen modularen Multilevel-Stromrichter 5, der einen Bremssteller 1 aufweist. Der Bremssteller 1 kann dabei wie dargestellt ausgeführt sein. Es ist alternativ auch möglich, den Bremssteller 1 beispielsweise wie in einem der Ausführungsbeispiele der Figuren 1 oder 2 auszuführen. Somit wird zur Vermeidung von Wiederholungen auch auf die Beschreibung zu den Figuren 1 und 2, sowie auf die dort eingeführten Bezugszeichen verwiesen. Der Zwischenkreis 51 des modularen Multilevel-Stromrichters 5 wird durch die Anschlüsse 11,12 des Bremsstellers 1 bzw. durch die Gleichspannungsanschlüsse 52 der Phasenmodule 53 gebildet. Dabei liegt die Zwischenkreisspannung U_{ZK} zwischen dem ersten Anschluss 11 und dem zweiten Anschluss 12 des Bremsstellers 1 an, wobei die jeweiligen Gleichspannungsanschlüsse 52 der jeweiligen Phasenmodule 53 derart miteinander verbunden sind, dass die jeweiligen Phasenmodule 53 in einer Parallelschaltung angeordnet sind und der Bremssteller 1 mittels seiner Anschlüsse 11,12 parallel zu den jeweiligen Phasenmodulen 53 angeordnet ist. Durch die Verwendung dreier Phasenmodule 53 des dargestellten Ausführungsbeispiels ist der modulare Multilevel-Stromrichter 5 dreiphasig mit drei Phasenanschlüssen 54 ausgebildet und eignet sich zur Speisung einer dreiphasigen Last, wie beispielsweise eines dreiphasigen Motors 7. Die Drosseln 55 des modularen Multilevel-Stromrichters 5 dienen einer besseren Steuer- und Regelbarkeit der Ströme des modularen Multilevel-Stromrichters 5.

Der modulare Multilevel-Stromrichter 1 weist zur Bereitstellung von Spannungen an den Phasenanschlüssen 54 eine Vielzahl von weiteren Submodulen 25 auf. Sofern die Halbleiter der Submodule 2 und der weiteren Submodule 25 die gleiche Spannungssperrfähigkeit aufweisen, hat es sich als günstig erwiesen, wenn die Anzahl der Submodule 2 des Bremsstellers 1 dem halben Wert von der Anzahl der weiteren Submodulen 25 des modularen Multilevel-Stromrichters entspricht bzw. etwas größer, insbesondere um eins oder zwei größer, ist. Damit kann der Einsatz von Halbleitern und Submodulen 2,25 und damit die Herstellungskosten für den vorgeschlagenem modularen Multilevel-Stromrichter 5 optimiert werden.

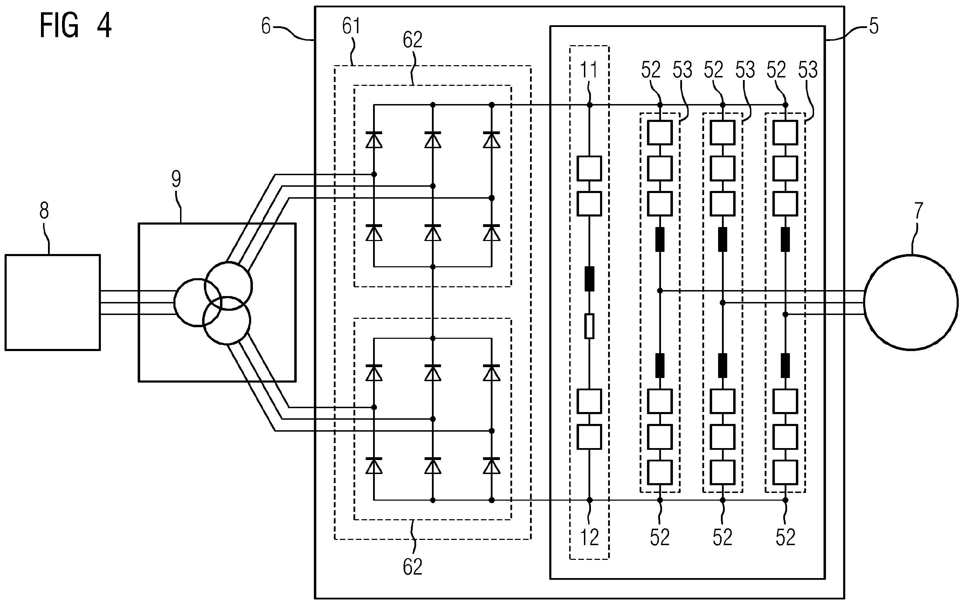

Die FIG 4 zeigt eine Stromrichteranordnung 6 mit einem modularen Multilevel-Stromrichter 5 und einer Einspeiseeinrichtung 61. Zur Vermeidung von Wiederholungen wird auf die Beschreibung der Ausführungsbeispiele zu den Figuren 1 bis 3 sowie auf die dort eingeführten Bezugszeichen verwiesen. Die Einspeiseeinrichtung 61 dient dazu, den modularen Multilevel-Stromrichter 5 mit elektrischer Energie aus einem Energieversorgungsnetz 8 zu versorgen. Die Einspeiseeinrichtung wird dabei sehr kostengünstig durch zwei Diodengleichrichter 62 gebildet. Dabei sind die Diodengleichrichter 62 über einen Transformator 9 mit dem Energieversorgungsnetz 8 verbunden. Der Transformator dient zum einen dazu, das Spannungsniveau zwischen der Stromrichteranordnung 6 und dem Energieversorgungsnetz 8 anzupassen und darüber hinaus die Diodengleichrichter 62 wechselspannungsseitig galvanisch voneinander zu entkoppeln.

Obwohl die Diodengleichrichter 62 keine Leistungsumkehr, also eine Rückspeisung von elektrischer Energie vom modularen Multilevel-Stromrichter 5 in das Energieversorgungsnetz 8 erlauben, ergibt sich durch den Bremssteller 1 der Vorteil, den Motor 7 generatorisch, d.h. verschleißfrei, abbremsen zu können. Dazu wird die vom Motor 7 im generatorischen Betrieb erzeugte elektrische Energie mittels des Bremsstellers 1 in Wärme umgewandelt.

Zusammenfassend betrifft die Erfindung einen Bremssteller für einen modularen Multilevel-Stromrichter, aufweisend einen Widerstand, eine erste Schaltgruppe sowie einen ersten Anschluss und einen zweiten Anschluss. Zur Verbesserung der Verwendbarkeit des Bremsstellers in einem Stromrichter wird vorgeschlagen, dass der Bremssteller ferner eine zweite Schaltgruppe aufweist, wobei die erste Schaltgruppe und die zweite Schaltgruppe jeweils mindestens ein Submodul aufweisen, wobei die erste Schaltgruppe zwischen dem Widerstand und dem ersten Anschluss und die zweite Schaltgruppe zwischen dem Widerstand und dem zweiten Anschluss derart angeordnet sind, dass die erste Schaltgruppe, der Widerstand und die zweite Schaltgruppe eine elektrische Reihenschaltung zwischen dem ersten Anschluss und dem zweiten Anschluss bilden. Die Erfindung betrifft weiter einen modularen Multilevel-Stromrichter mit einem derartigen Bremssteller. Weiter betrifft die Erfindung eine Stromrichteranordnung mit einem derartigen modularen Multilevel-Stromrichter und einer Einspeiseeinrichtung, wobei die Einspeiseeinrichtung mindestens einen Diodengleichrichter umfasst. Ferner betrifft die Erfindung ein Verfahren zum Betreiben eines derartigen Bremsstellers, eines derartigen modularen Multilevel-Stromrichters oder einer derartigen Stromrichteranordnung, wobei alle Submodule des Bremsstellers zur schnellen Reduktion eines Bremsstroms gleichzeitig eingeschaltet werden.

## Patentansprüche

1. Bremssteller (1) für einen modularen Multilevel-Stromrichter (5), aufweisend:
- einen Widerstand (3)
- eine erste Schaltgruppe (21) und zweite Schaltgruppe (22) und
- einen ersten Anschluss (11) und einen zweiten Anschluss (12),
wobei die erste Schaltgruppe (21) und die zweite Schaltgruppe (22) jeweils mindestens ein Submodul (2) aufweisen, wobei die erste Schaltgruppe (21) zwischen dem Widerstand (3) und dem ersten Anschluss (11) und die zweite Schaltgruppe (22) zwischen dem Widerstand (3) und dem zweiten Anschluss (12) derart angeordnet sind, dass die erste Schaltgruppe (21), der Widerstand (3) und die zweite Schaltgruppe (22) eine elektrische Reihenschaltung (40) zwischen dem ersten Anschluss (11) und dem zweiten Anschluss (12) bilden.

2. Bremssteller (1) nach Anspruch 1, wobei die erste und die zweite Schaltgruppe (21,22) jeweils mindestens zwei Submodule (2) aufweisen, wobei die Submodule (2) der jeweiligen Schaltgruppe (21,22) elektrisch in Reihe angeordnet sind.

3. Bremssteller (1) nach einem der Ansprüche 1 oder 2, wobei der Bremssteller (1) eine dritte Schaltgruppe (23) und einen weiteren Widerstand (31) aufweist, wobei die dritte Schaltgruppe (23) mindestens ein Submodul (2) aufweist, wobei der weitere Widerstand (31) und die dritte Schaltgruppe (23) in einer weiteren Reihenschaltung (41) angeordnet sind, wobei die weitere Reihenschaltung (41) zwischen der zweiten Schaltgruppe (22) und dem zweiten Anschluss (12) angeordnet und mit der Reihenschaltung (40) elektrisch in Reihe angeordnet ist.

4. Modularer Multilevel-Stromrichter (5) mit einem Bremssteller (1) nach einem der Ansprüche 1 bis 3, wobei der modulare Multilevel-Stromrichter (5) mindestens ein Phasenmodul (53) aufweist, wobei zwischen zwei Gleichspannungsanschlüssen (52) des Phasenmoduls (53) eine Vielzahl von in Reihe angeordneter, weiterer Submodule (25) angeordnet sind, wobei ein Verbindungspunkt zwischen zwei der weiteren Submodule (25) einen Phasenanschluss (54) des modularen Multilevel-Stromrichters (5) bildet, wobei der erste Anschluss (11) des Bremsstellers (1) mit einem ersten der zwei Gleichspannungsanschlüsse (52) des Phasenmoduls (53) und der zweite Anschluss (12) des Bremsstellers (1) mit einem zweiten der zwei Gleichspannungsanschlüsse (52) des Phasenmoduls (53) elektrisch verbunden ist.

5. Stromrichteranordnung (6) mit einem modularen Multilevel-Stromrichter (5) nach Anspruch 4 und einer Einspeiseeinrichtung (61), wobei die Einspeiseeinrichtung (61) mindestens einen Diodengleichrichter (62) umfasst.

6. Verfahren zum Betreiben eines Bremsstellers (1) nach einem der Ansprüche 1 bis 3 oder eines modularen Multilevel-Stromrichters (5) nach Anspruch 4 oder einer Stromrichteranordnung nach Anspruch 5, wobei alle Submodule (2) des Bremsstellers (1) zur schnellen Reduktion eines Bremsstroms gleichzeitig eingeschaltet werden.
